# EUROPÄISCHE PATENTSCHRIFT

(11) **EP 4 047 910 B1**
(45) Veröffentlichungstag und Bekanntmachung des Hinweises auf die Patenterteilung: **02.04.2025**
(21) Anmeldenummer: 21158697.9
(22) Anmeldetag: 23.02.2021
(51) Int. Cl.: H04M 1/02, H04M 1/24, H04M 1/738

(54) **TELEKOMMUNIKATIONS-ANSCHLUSS-EINHEIT, VERFAHREN ZU DEREN IDENTIFIKATION UND AUSLESEGERÄT**
TELECOMMUNICATIONS CONTROL UNIT, METHOD OF IDENTIFICATION THEREOF AND READOUT DEVICE
UNITÉ DE CONNEXION DES TÉLÉCOMMUNICATIONS, SON PROCÉDÉ D'IDENTIFICATION ET APPAREIL DE LECTURE

(43) Veröffentlichungstag der Anmeldung: 24.08.2022
(73) Patentinhaber: Deutsche Telekom AG, 53113 Bonn (DE)
(72) Erfinder: Chrast, Peter-Marc, 89129 Langenau (DE); Stehlik, Lysann, 28355 Bremen (DE); Hartke, Peter, 13158 Berlin (DE); Kaiser, Nils, 40597 Düsseldorf (DE); Voigt, Sebastian, 06231 Bad Dürrenberg (DE); Hölzel, Thomas, 16540 Hohen Neuendorf (DE); Landmann, Patrick, 55543 Bad Kreuznach (DE); Porstendörfer, Patrick, 33330 Gütersloh (DE)
(74) Vertreter: Blumbach · Zinngrebe Patentanwälte PartG mbB

(56) Entgegenhaltungen:
- DE-A1- 19 650 007
- US-A1- 2007 286 232
- US-B1- 9 894 091

## Beschreibung

Die Erfindung betrifft allgemein Telefonnetze und insbesondere eine Telekommunikations-Anschluss-Einheit, sowie ein Verfahren und eine Vorrichtung zur Identifikation einer Telekommunikations-Anschluss-Einheit.

Öffentliche Telekommunikationsnetze verfügen über zahlreiche Vermittlungsstellen, auch Ortsvermittlungsstellen genannt, an denen Endgeräte über entsprechende Teilnehmeranschlussleitungen angeschlossen sind. Die Teilnehmerendgeräte sind dabei an einer beim Teilnehmer installierten Telekommunikations-Anschluss-Einheit (TAE) angeschlossen.

Bei Einrichten eines Telefonanschlusses in den Räumen eines Teilnehmers kann von einem Mitarbeiter des Netzbetreibers mit Hilfe einer Kommunikation über die Teilnehmeranschlussleitung mit der Vermittlungsstelle geprüft werden, ob der Telefonanschluss vermittlungsseitig korrekt geschaltet ist. Dies kann beispielsweise mittels eines entsprechenden Service-Gerätes erfolgen, welches der Mitarbeiter vor Ort an die TAE anschließt.

Die sogenannte 1. TAE ist die aus Sicht des Netzbetreibers erste Anschlussdose in den Räumen des Teilnehmers. Sie ist der Übergabepunkt zum Endkunden und dient somit als Netzabschluss. Die 1. TAE gehört dem Netzbetreiber und enthält zu Messzwecken einen passiven Prüfabschluss (PPA).

Der PPA besteht aus einer Reihenschaltung einer Diode und eines Widerstandes von 470 kΩ, die zwischen die a-Ader und die b-Ader der Teilnehmeranschlussleitung geschaltet sind. Im Normalbetrieb sperrt die Diode durch die seitens der Ortsvermittlungsstelle in die a/b-Ader eingespeiste Gleichspannung, bei korrektem Anschluss der TAE an die a/b-Doppelader, d.h. die a-Klemme an Minus- und die b-Klemme an Pluspotential, ist also praktisch kein Stromfluss messbar. Zu Prüfzwecken kann von der Teilnehmerschaltung in der Vermittlungsstelle die Speisespannung des zu messenden Anschlusses umgepolt werden. Dann ist der Widerstand des PPA und damit auch der Widerstand der Teilnehmeranschlussleitung messbar. Auf diese Weise kann aus der Ferne mit der sogenannten systemexternen Prüftechnik (SEPT) überprüft werden, ob die Teilnehmeranschlussleitung bis zur 1. TAE des Benutzers in Bezug auf die galvanischen Messwerte, besonders Isolationswerte und Fremdspannungsanteile den Forderungen entspricht. Auf diese Art lässt sich beispielsweise eine Unterbrechung oder ein Leiterschluss auf der Teilnehmeranschlussleitung feststellen. Bei Abweichungen vom Sollwert können anhand des gemessenen Widerstands mögliche Fehler genauer klassifiziert werden.

Der passive Prüfabschluss hat für den Netzbetreiber hauptsächlich den Zweck, bei einer Störungsmeldung durch den Benutzer möglichst schnell eine Aussage zu treffen, in wessen Verantwortungsbereich der Fehler liegt, wobei eine erfolgreiche Messung der SEPT keine Aussage darüber zulässt, ob die Telefonleitung an die richtige Örtlichkeit geschaltet ist.

Die folgenden Druckschriften werden als Stand der Technik erachtet:
DE 196 50 007 A1, US 9 894 091 und US 2007/286232 A1. Der Erfindung liegt die Aufgabe zugrunde, einen Weg aufzuzeigen, wie das Einrichten eines Telefonanschlusses verbessert und/oder vereinfacht werden kann.

Das oben genannte technische Problem wird durch eine Telekommunikations-Anschluss-Einheit gemäß Anspruch 1, ein Auslesegerät gemäß Anspruch 9 und ein Verfahren gemäß Anspruch 14 gelöst. Vorteilhafte Ausführungsformen und Weiterbildungen sind Gegenstand der jeweiligen Unteransprüche.

Ein Kerngedanke der Erfindung ist darin zu sehen, eine Telekommunikations-Anschluss-Einheit mit einem auslesbaren Speicher auszurüsten, in welchem eine Identifikationsinformation gespeichert werden kann, welche die TAE eindeutig identifiziert.

Mit anderen Worten betrifft die Erfindung eine modifizierte TAE, welche in der Lage ist, sich selbst zu identifizieren. Eine erfindungsgemäß modifizierte TAE wird im Folgenden auch als smarte TAE bezeichnet. Besonders vorteilhaft ist der Speicher der smarten TAE sowohl mit einem Auslesegerät vor Ort als auch aus der Ferne auslesbar. Auf diese Weise kann schnell und auch automatisch erkannt werden, ob der jeweilige Anschluss zur Kundenlokation gehört.

Die Erfindung sieht dementsprechend eine Telekommunikations-Anschluss-Einheit vor, welche Anschlusskontakte zum Anschließen an eine Teilnehmeranschlussleitung und wenigstens eine Anschlussbuchse zum Anschließen einer teilnehmerseitigen Kommunikationsvorrichtung umfasst, wobei die Telekommunikations-Anschluss-Einheit ferner einen auslesbaren Datenspeicher mit einer darin speicherbaren Identifikationsinformation umfasst, wobei der Datenspeicher mittels eines externen Gerätes über die Anschlusskontakte oder über die wenigstens eine Anschlussbuchse auslesbar ist.

Vorteilhaft umfasst die Telekommunikations-Anschluss-Einheit eine Steuereinheit, mittels welcher der Datenspeicher auslesbar ist, wobei die Steuereinheit insbesondere dazu ausgebildet ist, in Antwort auf ein Aktivierungssignal, welches die Steuereinheit von dem externen Gerät empfängt, eine in dem Datenspeicher gespeicherte Identifikationsinformation an das externe Gerät zu übermitteln. Vorzugsweise ist die Steuereinheit dazu ausgebildet, in Antwort auf das Aktivierungssignal automatisch die im Datenspeicher gespeicherte Identifikationsinformation mittels eines strommodulierten Signals zu übermitteln. Zu diesem Zweck kann vorteilhaft als Aktivierungssignal von dem externen Gerät eine Spannung an die a- und b-Adern einer Teilnehmeranschlussleitung, an welche die Telekommunikations-Anschluss-Einheit angeschlossen ist, angelegt werden, wobei diese Spannung insbesondere oberhalb eines vorgegebenen Schwellwertes, insbesondere oberhalb einer Spannung von 60 V, insbesondere oberhalb einer Spannung von 64 V, liegt. Durch die angelegte Spannung kann die Steuereinheit aktiviert werden, wobei die Steuereinheit dann bei angelegter Spannung auf einfache Weise ein strommoduliertes Signal beispielsweise mittels wenigstens eines schaltbaren Widerstands erzeugen kann.

Zu diesem Zweck umfasst die Telekommunikations-Anschluss-Einheit vorteilhaft eine elektronische Schaltung mit zwei Anschlüssen zum Anschließen an die a- und b-Adern einer Teilnehmeranschlussleitung, wobei die elektronische Schaltung dazu ausgebildet ist, die Steuereinheit zu aktivieren, wenn an die Anschlüsse der elektronischen Schaltung eine Spannung oberhalb eines vorgegebenen Schwellwertes, insbesondere oberhalb einer Spannung von 60 V, insbesondere oberhalb einer Spannung von 64 V, angelegt wird. Vorteilhaft kann die elektronische Schaltung einen DIAC oder mehrere in Reihe geschaltete DIACs umfassen, deren Durchbruchspannung den Schwellwert der Spannung bestimmt, oberhalb dessen die Steuereinheit aktiviert wird, wobei die Aktivierung insbesondere dadurch erfolgt, dass die Steuereinheit mit einer Betriebsspannung versorgt wird, wenn der oder die DIACs leitfähig werden.

In einer besonders vorteilhaften Ausführungsform der Telekommunikations-Anschluss-Einheit ist die Steuereinheit als Mikrocontroller ausgebildet, wobei insbesondere der Mikrocontroller und der Datenspeicher in einem gemeinsamen integrierten Chip (IC) angeordnet sind, wobei der integrierte Chip insbesondere Bestandteil der elektronischen Schaltung ist.

Zum Erzeugen eines strommodulierten Signals umfasst die elektronische Schaltung vorzugsweise wenigstens einen ersten und einen zweiten Widerstand, wobei der erste Widerstand derart angeordnet ist, dass durch diesen ein elektrischer Strom zwischen den Anschlüssen der elektronischen Schaltung fließt, wenn an die Anschlüsse der elektronischen Schaltung eine Spannung oberhalb eines vorgegebenen Schwellwertes angelegt wird, und wobei der zweite Widerstand, gesteuert durch die Steuereinheit, parallel zum ersten Widerstand schaltbar ist, um die Stromstärke des zwischen den Anschlüssen der elektronischen Schaltung fließenden Stroms zu variieren.

Um eine wechselseitige Störung des Betriebs der in der TAE angeordneten elektronischen Schaltung und einer Datenübertragung zwischen der Vermittlungsstelle und eines an die TAE angeschlossenen Teilnehmerendgerätes zu vermeiden oder zu reduzieren, sind in der elektronischen Schaltung und/oder zwischen den Anschlüssen der elektronischen Schaltung und den a- und b-Adern der Teilnehmeranschlussleitung vorteilhaft geeignete Komponenten zur Unterdrückung von Störsignalen vorgesehen. Insbesondere wird dadurch eine Beeinflussung einer DSL-Datenübertragung durch die in der TAE angeordnete elektronische Schaltung vermieden. Zu diesem Zweck können vorteilhaft passive Filter vorgesehen sein, welche beispielsweise eine Kombination von Widerständen, Spulen und/oder Kondensatoren umfassen können. Vorteilhaft kann beispielsweise ein RL-Filter vorgesehen sein, welcher eine Induktivität und einen Widerstand umfasst. Denkbar ist auch der Einsatz anderer an sich bekannter Filter.

Die elektronische Schaltung kann ferner vorteilhaft einen Gleichrichter umfassen, wobei dieser insbesondere dazu dient, die Funktionsfähigkeit der Schaltung unabhängig von der Polung der von dem externen Gerät an die Anschlüsse der elektronischen Schaltung angelegten Spannung zu gewährleisten.

Die Telekommunikations-Anschluss-Einheit wird vorzugsweise vom Netzbetreiber als 1. TAE bereitgestellt, wobei die Telekommunikations-Anschluss-Einheit einen Netzabschluss bildet und einen passiven Prüfabschluss umfasst, wobei die elektronische Schaltung und der passive Prüfabschluss parallelgeschaltet sind, oder der passive Prüfabschluss in die elektronische Schaltung integriert ist.

Die Erfindung sieht ferner ein Auslesegerät zum Auslesen eines Datenspeichers einer oben beschriebenen Telekommunikations-Anschluss-Einheit vor, wobei das Auslesegerät insbesondere entweder ein über die Teilnehmeranschlussleitung mit der Telekommunikations-Anschluss-Einheit verbindbares entferntes Gerät, beispielsweise ein vermittlungsseitig angeordneter MSAN oder DSLAM, oder ein lokal mit der Telekommunikations-Anschluss-Einheit verbindbares Gerät ist, wobei ein lokal verbindbares Gerät insbesondere mit der wenigstens einen Anschlussbuchse der Telekommunikations-Anschluss-Einheit verbindbar ist.

Zum Aktivieren der in der Telekommunikations-Anschluss-Einheit angeordneten Steuereinheit ist das Auslesegerät vorzugsweise dazu ausgebildet, an eine in der Telekommunikations-Anschluss-Einheit integrierte elektronische Schaltung eine Spannung oberhalb eines vorgegebenen Schwellwertes, insbesondere oberhalb einer Spannung von 60 V, insbesondere oberhalb einer Spannung von 64 V, anzulegen.

Zum Ermitteln der in dem Datenspeicher der Telekommunikations-Anschluss-Einheit gespeicherten Identifikationsinformation ist das Auslesegerät vorteilhaft dazu ausgebildet, von der Telekommunikations-Anschluss-Einheit ein strommoduliertes Signal zu empfangen und aus diesem eine Identifikationsinformation zu ermitteln.

Die Erfindung sieht ferner ein Verfahren zur Identifikation einer Telekommunikations-Anschluss-Einheit vor, für welches eine oben beschriebene Telekommunikations-Anschluss-Einheit bereitgestellt wird. Vor Installation der Telekommunikations-Anschluss-Einheit an einem Teilnehmeranschluss wird in dem Datenspeicher der Telekommunikations-Anschluss-Einheit eine eindeutige Identifikationsinformation gespeichert. Das Speichern der eindeutigen Identifikationsinformation in dem Datenspeicher erfolgt vorteilhaft bereits durch den Hersteller der Telekommunikations-Anschluss-Einheit. Denkbar ist jedoch auch, die eindeutige Identifikationsinformation zu einem späteren Zeitpunkt über eine geeignete Schnittstelle in dem Datenspeicher zu speichern.

Das Verfahren zur Identifikation der Telekommunikations-Anschluss-Einheit sieht ferner vor, eine in der Telekommunikations-Anschluss-Einheit angeordnete Steuereinheit zu aktivieren, indem von einem Auslesegerät, wie es oben beschrieben wurde, ein Aktivierungssignal zu der Steuereinheit übertragen wird, wobei das Auslesegerät mit den Anschlusskontakten oder der wenigstens einen Anschlussbuchse der Telekommunikations-Anschluss-Einheit verbunden ist. Das Verfahren sieht ferner vor, dass in Antwort auf die Aktivierung durch die Steuereinheit automatisch ein in Abhängigkeit der in dem Datenspeicher gespeicherten Identifikationsinformation erzeugtes Signal von der Telekommunikations-Anschluss-Einheit zu dem verbundenen Auslesegerät übertragen wird, und das verbundene Auslesegerät das Signal empfängt und aus dem empfangenen Signal die Identifikationsinformation ermittelt.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Abbildung eines typischen Aufbaus eines Teilnehmeranschlusses, welcher über eine Teilnehmeranschlussleitung mit einer Vermittlungsstelle eines Netzbetreibers verbunden ist, und bei welchem eine erfindungsgemäße Telekommunikations-Anschluss-Einheit eingesetzt wird,
- Fig. 2:: schematisch die Abbildung eines passiven Prüfabschlusses einer Telekommunikations-Anschluss-Einheit,
- Figuren 3a und 3b:: eine schematische Abbildung einer bevorzugten Ausführungsform einer in einer Telekommunikations-Anschluss-Einheit angeordneten elektronischen Schaltung,
- Fig. 4:: ein schematisches und idealisiertes Diagramm eines zeitlichen Verlaufs der Stromstärke eines nach Aktivieren der Steuereinheit der in den Figuren 3a und 3b dargestellten elektronischen Schaltung fließenden Stroms,
- Fig. 5:: eine schematische und idealisierte Detailansicht des in Fig. 4 dargestellten Verlaufs der Stromstärke, und
- Fig. 6:: die schematische Abbildung eines Gehäuses einer bevorzugten Ausführungsform einer erfindungsgemäßen Telekommunikations-Anschluss-Einheit.

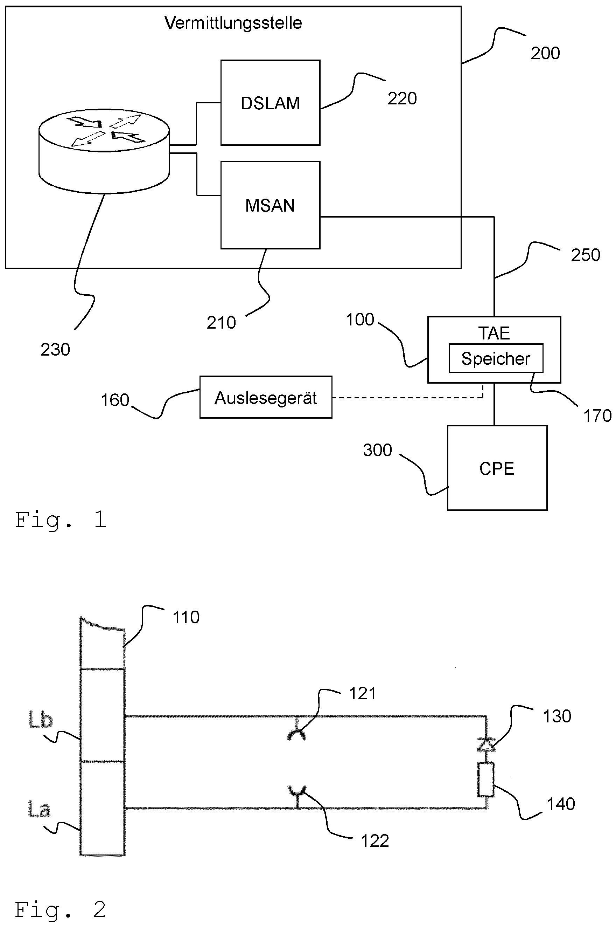

In Fig. 1 ist schematisch eine Telekommunikations-Anschluss-Einheit 100 dargestellt, wobei diese als smarte TAE mit einem Datenspeicher 170 zur Speicherung einer eindeutigen Identifikationsinformation ausgebildet ist. Im dargestellten Beispiel ist die TAE 100 als 1. TAE an einem Teilnehmeranschluss installiert und über die Teilnehmeranschlussleitung 250 mit einem MSAN (Multi-Service Access Node) 210 in der Vermittlungsstelle 200 eines Netzbetreibers verbunden. Der MSAN 210 verbindet die Teilnehmeranschlussleitung 250 mit dem Kernnetz des Netzbetreibers und wickelt die für eine an den TAE 100 teilnehmerseitig angeschlossene Kommunikationsvorrichtung, wie zum Beispiel ein Teilnehmerendgerät 300, jeweils vorgesehene Kommunikation mit dem jeweiligen Protokoll ab, beispielsweise über das Telefonnetz oder das Internet. Alternativ könnte die Teilnehmeranschlussleitung beispielsweise auch an einem DSLAM 220 angeschlossen sein. In der dargestellten Vermittlungsstelle 200 sind nur beispielhaft ein DSLAM 220 und ein MSAN 210 dargestellt, welche mit einem Breitband-Zugangsserver BRAS (Broadband Remote Access Server) 230, auch als BNG (Broadband Network Gateway) bezeichnet, verbunden sind. Typischerweise sind in einer Vermittlungsstelle 200 eine Mehrzahl DSLAMs und/oder MSANs angeordnet. Auch könnte der MSAN, welcher den vermittlungsseitigen Leitungsabschluss der Teilnehmeranschlussleitung 250 bildet, als Outdoor-MSAN in einem Kabelverzweiger angeordnet sein.

Um eine Telekommunikations-Anschluss-Einheit zu identifizieren, und insbesondere um zu prüfen, ob ein Teilnehmeranschluss zu einer Kundenlokation gehört. sieht die Erfindung daher vor, eine Telekommunikations-Anschluss-Einheit 100 bereitzustellen, in dem Datenspeicher 170 der TAE 100 eine eindeutige Identifikationsinformation zu speichern, und die TAE 100 mit gespeicherter ID an einem Teilnehmeranschluss zu installieren.

Wie auch eine herkömmliche TAE umfasst die TAE 100 Anschlusskontakte zum Anschließen an die Teilnehmeranschlussleitung 250, sowie wenigstens eine Anschlussbuchse zum Anschließen einer teilnehmerseitigen Kommunikationsvorrichtung, wie zum Beispiel dem dargestellten Teilnehmerendgerät 300. Im Unterschied zu einer herkömmlichen TAE umfasst die TAE 100 einen auslesbaren Datenspeicher 170 mit einer darin speicherbaren Identifikationsinformation, wobei der Datenspeicher 170 mittels eines externen Gerätes auslesbar ist. Die im Datenspeicher 170 gespeicherte Identifikationsinformation dient vorzugsweise dazu, die TAE 100 eindeutig zu identifizieren, wobei die eindeutige Identifikationsinformation vorteilhaft bereits vom Hersteller der TAE 100 in dem Datenspeicher 170 gespeichert wird.

Im dargestellten Ausführungsbeispiel könnte als externes Gerät der MSAN 210 eingesetzt werden, welcher über die Anschlusskontakte der TAE 100 und über die Teilnehmeranschlussleitung 250 mit der TAE 100 verbunden ist. Alternativ könnte als externes Gerät auch ein Auslesegerät 160 eingesetzt werden, welches lokal über eine Anschlussbuchse der TAE 100 mit der TAE 100 verbindbar ist. Für eine erfindungsgemäße TAE, welche an den DSLAM 220 angeschlossen ist, könnte auch der DSLAM 220 als externes Gerät eingesetzt werden.

Die in Fig. 1 dargestellte, erfindungsgemäße TAE 100 wird im dargestellten Beispiel als 1. TAE eingesetzt und umfasst vorteilhaft einen passiven Prüfabschluss (PPA). In Fig. 2 ist die elektrische Ausführung eines solchen an sich bekannten passiven Prüfabschlusses (PPA) schematisch dargestellt. Der PPA besteht aus einer Reihenschaltung einer Diode 130 und eines Widerstandes 140 mit einem Widerstandswert von typischerweise 470 kΩ, wobei die Reihenschaltung zwischen die Anschlusskontakte La und Lb einer TAE geschaltet ist. Die Anschlusskontakte La und Lb dienen zum Anschließen der a-bzw. b-Ader einer als Zweidrahtleitung ausgebildeten Teilnehmeranschlussleitung und sind im dargestellten Ausführungsbeispiel innerhalb einer Anschlussleiste 110 angeordnet. Ferner sind in Fig. 2 Kontakte 121 und 122 einer Anschlussbuchse der TAE dargestellt, welche jeweils mit dem Anschlusskontakt La bzw. Lb verbunden sind, wobei die Anschlussbuchse zum Anschließen einer teilnehmerseitigen Kommunikationsvorrichtung dient.

Um mit Hilfe des externen Gerätes die im Datenspeicher 170 gespeicherte Identifikationsinformation auszulesen, umfasst die TAE 100 vorteilhaft eine Steuereinheit, die dazu ausgebildet ist, in Antwort auf ein Aktivierungssignal, welches die Steuereinheit von dem externen Gerät, d.h. beispielsweise von dem Auslesegerät 160 oder dem MSAN 210, empfängt, eine in dem Datenspeicher gespeicherte Identifikationsinformation an das externe Gerät zu übermitteln. In einer besonders bevorzugten Ausführungsform wird von dem externen Gerät als Aktivierungssignal eine Spannung an Anschlüsse der TAE 100 angelegt, insbesondere eine Gleichspannung oberhalb eines vorgegebenen Schwellwertes, insbesondere oberhalb von 60 V, insbesondere oberhalb von 64 V, wobei diese Spannung an die zwei Anschlüsse der TAE 100 angelegt wird, welche zum Anschließen an die a- und b-Adern der Teilnehmeranschlussleitung dienen.

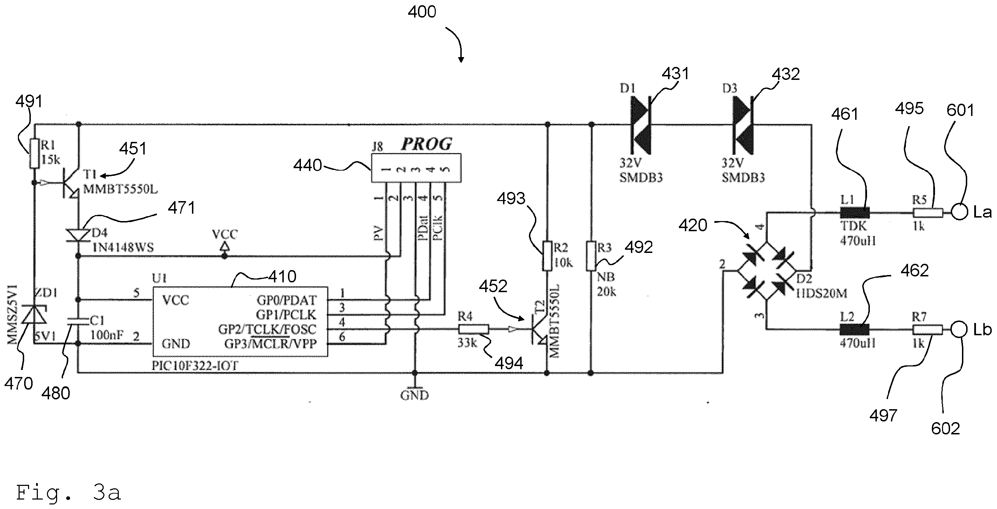

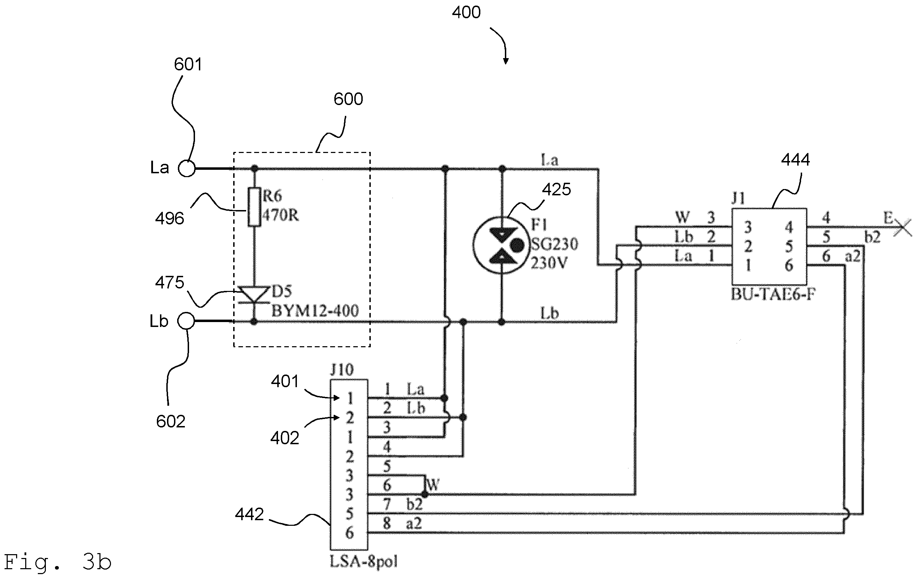

Die TAE 100 umfasst besonders vorteilhaft die in den Figuren 3a und 3b schematisch dargestellte elektronische Schaltung 400, welche die Anschlüsse 401 und 402 zum Anschließen an die a- und b-Adern der Teilnehmeranschlussleitung 250 umfasst. Die Figuren 3a und 3b zeigen jeweils einen Teil der elektronischen Schaltung in schematischer Darstellung, wobei die Schaltungsteile jeweils an den mit den Bezugszeichen 601 und 602 bezeichneten Punkten verbunden sind. Die Anschlüsse 401 und 402 sind im dargestellten Ausführungsbeispiel innerhalb einer 8-poligen Anschlussleiste 442 vorgesehen, wobei die Anschlussleiste 442 vorteilhaft in LSA-Schneidklemmtechnik ausgeführt ist, wobei Anschlüsse der Anschlussleiste 442 mit Anschlüssen einer F-kodierten Anschlussbuchse 444 verbunden sind. Die Anschlüsse der Anschlussleiste 442 sind von 1 bis 8 durchnummeriert, wobei die Werte, die innerhalb des Rechtecks angegeben sind, als welches die Anschlussleiste 442 schematisch dargestellt ist, die Anschlüsse der Anschlussbuchse 444 wiedergeben, mit denen der jeweilige Anschluss der Anschlussleiste 442 verbunden ist. Im dargestellten Ausführungsbeispiel sind insbesondere die Anschlüsse 1 und 3, 2 und 4, sowie 5 und 6 der Anschlussleiste 442 jeweils miteinander verbunden. Die sich ergebende Anschlussbelegung der Anschlussbuchse 444 entspricht der üblichen Anschlussbelegung einer F-kodierten Anschlussbuchse einer TAE, wobei der Anschluss 4 der Anschlussbuchse 444 nicht verwendet wird.

Es sei ferner angemerkt, dass in den Figuren 3a und 3b zusätzlich zu den Bezugszeichen auf übliche Weise Parameterwerte und/oder Typbezeichnungen der eingesetzten Komponenten zur detaillierten Veranschaulichung angegeben sind.

Die elektronische Schaltung 400 umfasst als Steuereinheit einen integrierten Chip 410, wobei im dargestellten Ausführungsbeispiel ein Chip vom Typ PIC10F322-IOT eingesetzt wird. Der Chip 410 umfasst im dargestellten Ausführungsbeispiel auch den Datenspeicher 170, d.h. die Identifikationsinformation ist in einem Speicher des Chips 410 gespeichert. Im dargestellten Ausführungsbeispiel ist der Datenspeicher 170 insbesondere als Flash-Speicher des Chips 410 ausgebildet. Im Flash-Speicher des Chips 410 ist insbesondere auch ein von dem Prozessor des Chips 410 ausführbares Programm, umfassend vom Prozessor ausführbare Anweisungen, gespeichert, so dass im dargestellten Ausführungsbeispiel der Datenspeicher 170 auch als Programmspeicher fungiert. Das gespeicherte Programm wird vorzugsweise automatisch ausgeführt, sobald der Chip 410 durch Anlegen einer Betriebsspannung aktiviert wird, wobei das Programm auf die in dem Datenspeicher 170 gespeicherte Identifikationsinformation zugreifen kann.

Die elektronische Schaltung 400 ist dazu ausgebildet, die Steuereinheit, d.h. den Chip 410 zu aktivieren, wenn an die Anschlüsse 401 und 402 eine Spannung oberhalb eines vorgegebenen Schwellwertes, insbesondere oberhalb einer Spannung von 60 V, insbesondere oberhalb einer Spannung von 64 V, angelegt wird.

Die Steuereinheit der TAE 100, d.h. in der dargestellten Ausführungsform der Chip 410, ist dazu ausgebildet, in Antwort auf ein Aktivierungssignal, d.h. insbesondere in Antwort auf eine an die Anschlüsse 401 und 402 der elektronischen Schaltung 400 angelegte Spannung, eine in dem Datenspeicher 170 gespeicherte Identifikationsinformation an das externe Gerät 160 bzw. 210, vorzugsweise mittels eines strommodulierten Signals, zu übermitteln. Zu diesem Zweck umfasst die elektronische Schaltung 400 wenigstens einen ersten und einen zweiten Widerstand 492 und 493, wobei der erste Widerstand 492 derart angeordnet ist, dass durch diesen ein elektrischer Strom zwischen den Anschlüssen 401 und 402 der elektronischen Schaltung 400 fließt, wenn an die Anschlüsse 401 und 402 der elektronischen Schaltung 400 eine Spannung oberhalb eines vorgegebenen Schwellwertes angelegt wird, und wobei der zweite Widerstand 493, gesteuert durch die Steuereinheit 410, parallel zum ersten Widerstand 492 schaltbar ist, um die Stromstärke des zwischen den Anschlüssen 401 und 402 der elektronischen Schaltung 400 fließenden Stroms zu variieren. Im dargestellten Ausführungsbeispiel umfasst die elektronische Schaltung zum Parallelschalten des Widerstands 493 einen Transistor 452, welcher von einem Ausgangsanschluss des Chips 410 über den Widerstand 494 angesteuert wird.

Die Telekommunikations-Anschluss-Einheit 100 wird vorzugsweise vom Netzbetreiber als 1. TAE bereitgestellt, wobei die Telekommunikations-Anschluss-Einheit 100 einen Netzabschluss bildet und einen passiven Prüfabschluss 600 umfasst, analog zu dem in Fig. 2 dargestellten PPA. Der passive Prüfabschluss 600 kann als Bestandteil der elektronischen Schaltung 400 ausgebildet sein, wie in den Figuren 3a und 3b dargestellt. Alternative könnte aber auch eine beispielsweise auf einer Platine angeordnete elektronische Schaltung vorgesehen werden, welche die in den Figuren 3a und 3b dargestellten Komponenten bis auf den PPA 600 umfasst, wobei die elektronische Schaltung und der PPA in dieser Ausführungsform parallel an die Anschlüsse der TAE 100 zum Anschließen der a-und b-Ader der Teilnehmeranschlussleitung geschaltet sind. Diese Ausführungsform mit einer separaten PPA kann besonders vorteilhaft sein, wenn zum Beispiel eine herkömmliche TAE mit PPA mit einer elektronischen Schaltung zu einer erfindungsgemäßen TAE erweitert werden soll.

Im Folgenden wird die Funktionsweise der in den Figuren 3a und 3b schematisch dargestellten elektronischen Schaltung nochmals näher erläutert.

Die DIACs 431 und 432 haben im dargestellten Ausführungsbeispiel jeweils eine Durchbruchsspannung von 32 V, so dass die Reihenschaltung der beiden DIACs erst bei einer Spannung über 64 V leitfähig wird. Wird an die Anschlüsse 401 und 402 der elektronischen Schaltung vom MSAN 210 über die Teilnehmeranschlussleitung 250 eine Speisespannung in Form einer Gleichspannung von üblicherweise 60 V angelegt, so schalten dementsprechend die DIACs nicht durch.

Der passive Prüfabschluss 600 arbeitet bei Anlegen einer üblichen Speisespannung von 60 V jedoch auf herkömmliche Weise, d.h. bei vermittlungsseitigem Umpolen der Speisespannung derart, dass der Anschluss 401 an Pluspotential und der Anschluss 402 an Minuspotential liegt, ist die Diode 475 des passiven Prüfabschlusses 600 leitend und es fließt ein elektrischer Strom durch den Widerstand 496, wodurch der Vermittlungsstelle ermöglicht wird, den Widerstand 496 des PPA 600 und damit auch den Widerstand der Teilnehmeranschlussleitung zu messen.

Wird jedoch eine Gleichspannung an die Anschlüsse 401 und 402 angelegt, die oberhalb eines vorgegebenen Grenzwertes liegt, so wird eine Steuereinheit der TAE 100, im dargestellten Ausführungsbeispiel der Chip 410, aktiviert. Im dargestellten Ausführungsbeispiel ist der Grenzwert durch die Dimensionierung der DIACs 431 und 432 vorgegeben und beträgt 64 V. Bei einer Speisespannung oberhalb dieses Grenzwertes werden die DIACs 431 und 432 leitfähig, wodurch der Chip 410 mit einer Betriebsspannung versorgt wird. Vorteilhaft umfasst die elektronische Schaltung 400 einen Gleichrichter 420, so dass der Chip 410 bei einer an die Anschlüsse 401 und 402 angelegten Gleichspannung oberhalb des Grenzwertes unabhängig von der Polung der angelegten Spannung aktiviert wird.

Der Widerstand 491, der Transistor 451, die Zenerdiode 470, der Kondensator 480 und die Diode 471 bilden eine Schaltung zur Regelung der Betriebsspannung des Chips 410, wobei die Sollgröße der Regelschaltung durch die Durchbruchspannung der in Sperrrichtung geschalteten Zenerdiode 470 bestimmt wird und die Regelung mittels des Transistors 451 erfolgt, und wobei der Kondensator 480 als Glättungskondensator dient.

Vorteilhaft umfasst die elektronische Schaltung 400 ferner einen Überspannungsschutz. Zu diesem Zweck ist vorzugsweise ein zwischen den Anschlüssen 401 und 402 angeordneter Überspannungsableiter 425 vorgesehen, welcher im dargestellten Ausführungsbeispiel als zweipoliger Gasableiter ausgebildet ist.

Die Widerstände 495 und 497 und die Induktivitäten 461 und 462 dienen der Vermeidung von wechselseitigen Störungen zwischen der elektronischen Schaltung 400 und einer Datenübertragung, die zwischen der Vermittlungsstelle und dem an die TAE 100 angeschlossenen Teilnehmerendgerät 300 über die Teilnehmeranschlussleitung 250 stattfindet, insbesondere zum Ausschluss einer DSL-Beeinflussung.

Wie oben beschrieben wird zum Auslesen der gespeicherten ID eine in der TAE 100 angeordnete Steuereinheit, d.h. beispielsweise der Chip 410, aktiviert, wobei dies durch ein Aktivierungssignal erfolgt, welches der Steuereinheit von einem Auslesegerät bereitgestellt wird, wobei als Auslesegerät insbesondere ein mit den Anschlusskontakten 401 und 402 verbundener MSAN 210 eingesetzt werden kann, oder ein mit einer Anschlussbuchse 444 der TAE 100 verbundenes Auslesegerät 160.

In Antwort auf die Aktivierung erzeugt die Steuereinheit, d.h. im dargestellten Ausführungsbeispiel der Chip 410, automatisch und in Abhängigkeit der in dem Datenspeicher gespeicherten Identifikationsinformation ein Signal, welches von der TAE 100 zu dem verbundenen Auslesegerät 210 bzw. 160 übermittelt wird. Das verbundene Auslesegerät empfängt das Signal und wertet dieses aus, um die im Signal enthaltene Identifikationsinformation zu ermitteln.

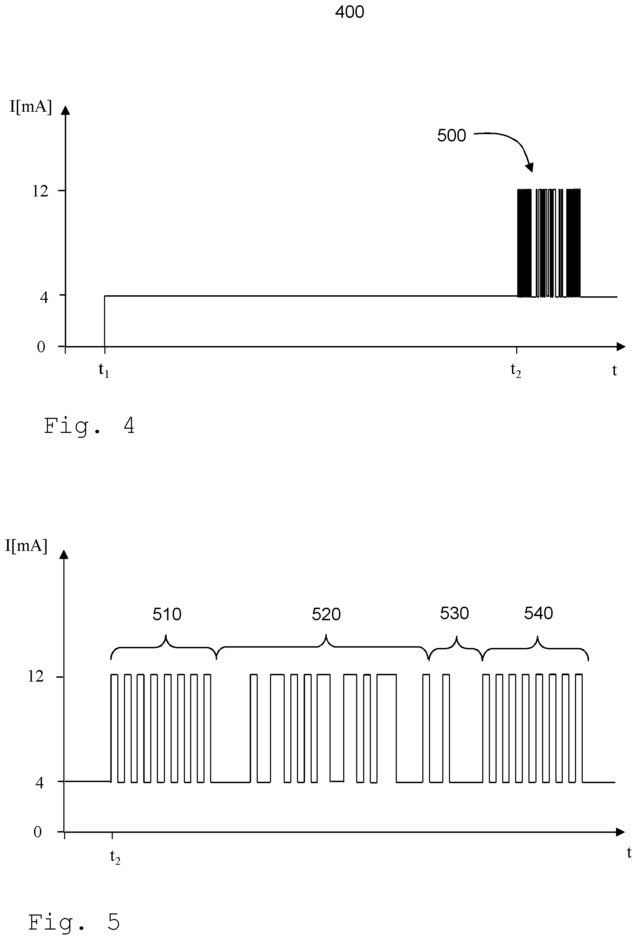

Im Folgenden wird die Signalübermittlung in Verbindung mit den Figuren 4 und 5 näher erläutert.

Es sei angenommen, dass an die Anschlüsse 401 und 402 der elektronischen Schaltung 400 von einem mit den Anschlüssen 401 und 402 verbundenen externen Gerät, insbesondere durch den MSAN 210 oder das Auslesegerät 160, eine Gleichspannung angelegt wird. Wird die Spannung durch den MSAN 210 bereitgestellt, so ist die zwischen den Anschlüssen 401 und 402 anliegende Spannung auch abhängig vom internen Widerstand des MSAN 210 sowie vom Leitungswiderstand der Teilnehmeranschlussleitung 250. An unterschiedlichen Teilnehmeranschlüssen kann sich daher bei gleicher Spannung, die vom MSAN 210 bereitgestellt wird, die zwischen den Anschlüssen 401 und 402 anliegende Spannung unterscheiden. Ferner sei angenommen, dass das Minuspotential der angelegten Gleichspannung an dem Anschluss 401 und das Pluspotential der angelegten Gleichspannung an dem Anschluss 402 anliegt. Dies entspricht der üblichen Polung der Speisespannung und der Sperrrichtung des PPA 600.

Aufgrund der DIACs 431 und 432 beginnt nun erst ab einer bestimmten Spannungsschwelle ein gewisser Strom durch den Widerstand 492 zu fließen, wobei im dargestellten Ausführungsbeispiel die Schwellspannung bei 64 V liegt. Liegt beispielsweise zwischen den Anschlüssen 401 und 402 eine Gleichspannung von 80 V an, so fließt zunächst ein elektrischer Strom zwischen den Anschlüssen 401 und 402, dessen Stromstärke maßgeblich durch den Wert des Widerstandes 492 bestimmt wird. Im dargestellten Beispiel hat der Widerstand 492 einen Wert von 20 kΩ, so dass zunächst ein Strom mit einer Stromstärke von etwa 4 mA fließt.

Dieser Stromfluss kann von dem externen Gerät detektiert werden und bildet somit bereits einen ersten Teil einer Prüfung eines Teilnehmeranschlusses. Gleichzeitig wird, wie oben beschrieben, der Chip 410 durch Bereitstellen einer Betriebsspannung an dem mit VCC gekennzeichneten Anschluss des Chips 410 aktiviert, wodurch der in dem Chip 410 enthaltene Mikrocontroller ein in dem Speicher des Chips 410 gespeichertes Programm ausführt.

Das Ausführen des gespeicherten Programms bewirkt, dass nach Ablauf einer vorgegebenen Wartezeit der Mikrocontroller des Chips 410 abhängig von einer Datenfolge den Widerstand 493 parallel zum Widerstand 492 schaltet, so dass sich bei parallel geschaltetem Widerstand 493 der Stromfluss in etwa auf eine Stromstärke von 12 mA verdreifacht, da im dargestellten Ausführungsbeispiel der Widerstand 493 einen Wert von 10 kΩ hat. Ein Stromfluss von 12 mA entspricht dann einem High-Pegel und ein Stromfluss von 4 mA einem Low-Pegel. Das Parallelschalten des Widerstandes 493 durch den Chip 410 erfolgt mittels des Transistors 452, welcher durch ein Signal an einem Ausgang des Chips 410 angesteuert wird.

In Abhängigkeit der vorgegebenen Datenfolge wird der Stromfluss derart gesteuert, dass ein High-Pegel einem binären Wert 1 der Datenfolge und ein Low-Pegel einem binären Wert 0 der Datenfolge entspricht, wobei die Datenfolge die in dem Datenspeicher der TAE 100 gespeicherte Identifikationsinformation umfasst. Die Datenfolge kann vorteilhaft weitere Informationen, insbesondere Synchronisations- und Prüfdaten umfassen.

Die absoluten Stromwerte sind bei einfacher Auslegung mit Widerständen proportional abhängig von der an der TAE-Dose 100 verfügbaren Spannung, die ja aufgrund der großen Leitungslängenvarianz sehr unterschiedlich sein kann. Die Prüfung bzw.

Auswertung der Stromwerte durch das externe Gerät, d.h. zum Beispiel durch den MSAN 210 oder das Auslesegerät 160, erfolgt daher vorteilhaft bezogen auf relative Werte und nicht auf absolute Werte der Stromstärke. Auf diese Weise kann der Aufbau der elektronischen Schaltung 400 einfach gehalten werden, wodurch auf vorteilhafte Weise eine geringere Größe der elektronischen Schaltung 400 und damit auch geringere Kosten ermöglicht werden, als dies bei einer definierten Stromregelung mit absoluten Größen möglich wäre.

Fig. 4 zeigt schematisch und in idealisierter Form den zeitlichen Verlauf der Stromstärke nach Einschalten einer Spannung oberhalb der vorgegebenen Schwellspannung zum Zeitpunkt t₁, wobei beispielsweise eine Gleichspannung von 80 V an die Anschlüsse 401 und 402 der elektronischen Schaltung 400 angelegt wird.

Es fließt beispielsweise zunächst ein Strom von 4 mA, d.h. ein Strom auf dem Low-Pegel. Die binäre Datenübertragung der Datenfolge 500 beginnt nach einer vorgegebenen Wartezeit von beispielsweise 500 Millisekunden zum Zeitpunkt t₂, d.h. t₂ - t₁ = 500 ms. Die Wartezeit wird beispielsweise mit Hilfe eines in dem Chip 410 integrierten Timers bewirkt.

In Fig. 5 ist der Stromverlauf zur Übertragung der Datenfolge 500 ab dem Zeitpunkt t₂ nochmals im Detail schematisch dargestellt, wobei ein idealisiertes Rechtecksignal dargestellt ist, welches den prinzipiellen Verlauf wiedergibt. Der reale Stromverlauf weicht von dem dargestellten ideal rechteckigen Verlauf ab und wird beispielsweise auch durch das kapazitive und induktive Verhalten der Übertragungsleitungen bestimmt.

Zur Synchronisierung werden zunächst 8 High-Low Pulse übermittelt, wobei diese 16 Bit der Datenfolge entsprechen und in Fig. 5 mit dem Bezugszeichen 510 bezeichnet sind. Direkt daran anschließend folgt die eigentliche Identifikationsinformation, welche im Datenspeicher des Chips 410 gespeichert ist und im dargestellten Ausführungsbeispiel eine ID-Kennung mit einer Datenlänge von 32 Bit ist, in Fig. 5 mit dem Bezugszeichen 520 bezeichnet. Ferner umfasst die Datenfolge einen Prüfwert zur Verifikation der ID-Kennung, im dargestellten Beispiel ein CRC (Cyclic Redundancy Check) mit einer Datenlänge von 8 Bit, welcher in Fig. 5 mit dem Bezugszeichen 530 bezeichnet ist. Der CRC-Prüfwert wird nach einer vorgegebenen Berechnungsvorschrift aus dem Wert der ID-Kennung berechnet. Entsprechende Berechnungsverfahren sind an sich bekannt und können beispielswiese die Bildung einer Quersumme umfassen. Da die ID-Kennung die TAE 100 eindeutig identifiziert und dementsprechend eine ID-Kennung je TAE nur einmalig vergeben wird und sich danach nicht ändert, kann vorteilhaft auch der zu übertragende CRC einmalig bei der Herstellung des TAE 100 ermittelt und in dem Datenspeicher des Chips 410 gespeichert werden, satt den CRC-Prüfwert bei jeder Übertragung neu zu berechnen. Abschließend folgt nochmals eine Folge von 8 High-Low Pulsen, d.h. 16 Bit, zur Synchronisation, in Fig. 5 mit dem Bezugszeichen 540 bezeichnet. Insgesamt wird daher im dargestellten Ausführungsbeispiel also eine Datenfolge mit einer Datenlänge von insgesamt 72 Bit übertragen.

Sollte die Verifikation anhand des empfangenen CRC eine fehlerhafte Übertragung signalisieren, so wird vorteilhaft durch Ausschalten und erneutes Einschalten der hohen Spannung, d.h. der Spannung oberhalb des vorgegebenen Schwellwertes, der Vorgang wiederholt. In dem in Fig. 5 dargestellten Ausführungsbeispiel hat die Identifikationsinformation, d.h. die gespeicherte ID, einen dezimalen Wert von 81 107 681 und der CRC-Prüfwert hat einen Wert von 32. Die Taktrate, mit welcher die Datenfolge 500 übertragen wird, kann vorteilhaft einen Wert von etwa 1 ms / Bit haben.

Nochmals bezugnehmend auf die Figuren 3a und 3b, ist in der dargestellten Ausführungsform der elektronischen Schaltung 400 eine Anschlussleiste 440 vorgesehen, welche als Programmierschnittstelle dient und mit deren Hilfe der Chip 410 programmiert werden kann. Besonders vorteilhaft wird der Chip 410 aber einmalig herstellerseitig programmiert und es wird eine zugeordnete einzigartige Identifikationsinformation in dem Datenspeicher des Chips 410 gespeichert, und es wird auf die in Fig. 3a dargestellte Anschlussleiste 440 und mit dieser verbundene Anschlussleitungen verzichtet, so dass eine nachträgliche Änderung der gespeicherten Identifikationsinformation vermieden wird. In diesem Fall werden nur die mit den Nummern 5, 2 und 4 bezeichneten Anschlüsse des Chips 410 verwendet, d.h. der Anschluss 5 für die Betriebsspannung, der Anschluss 2 zum Anschließen an Masse, sowie der Anschluss 4 als Ausgang zum Ansteuern des Transistors 452.

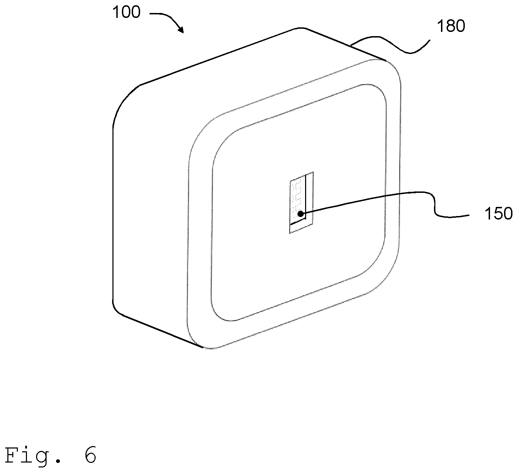

In Fig. 6 ist bespielhaft eine bevorzugte Ausführungsform der TAE 100 dargestellt, welche ein Gehäuse 180 umfasst, sowie eine Anschlussbuchse 150, bei welcher es sich im dargestellten Ausführungsbeispiel um eine F-kodierte Anschlussbuche handelt, wobei diese insbesondere der in Fig. 3b dargestellten Anschlussbuchse 444 entspricht.

Die Komponenten der oben beschriebenen und in den Figuren 3a und 3b schematisch dargestellten elektronischen Schaltung 400 sind vorzugsweise vollständig oder teilweise auf einer gemeinsamen Platine innerhalb des Gehäuses 180 angeordnet.

Denkbar wäre auch, dass die TAE 100 eine Mehrzahl F- und/oder N-kodierter Anschlussbuchsen umfasst, wobei diese untereinander auf an sich bekannte Weise verschaltet sind.

Die oben beschriebene elektronische Schaltung 400 ist ein bevorzugtes Ausführungsbeispiel, da es einen besonders einfachen Aufbau der elektronischen Schaltung 400 ermöglicht und einen unnötigen Energieverbrauch und unnötige Wärmeentwicklung vermeidet.

Statt der oben beschriebenen Aktivierung der Steuereinheit der TAE 100 durch eine an die Anschlüsse 401 und 402 angelegte Spannung oberhalb einer vorgegebenen Schwellspannung, wären jedoch auch andere Varianten zur Aktivierung der Steuereinheit denkbar, wie zum Beispiel die Übertragung eines vorgegebenen Datensignals, wobei auch vorgesehen sein könnte, die Steuereinheit dauerhaft mit einer Betriebsspannung zu versorgen.

Der Einsatz einer erfindungsgemäßen TAE, wie der oben beschriebenen TAE 100, ermöglicht es besonders vorteilhaft, vermittlungsseitig eine vollständige Überprüfung der Verschaltung eines Teilnehmeranschlusses durchzuführen, ohne die Notwendigkeit einer Überprüfung der Verschaltung vor Ort.

Insbesondere bei Installation einer erfindungsgemäßen TAE an einer Kundenlokation kann vorteilhaft vor Ort die installierte TAE eindeutig identifiziert werden und die eindeutige Identifikationsinformation mit dem jeweiligen Teilnehmeranschluss verknüpft werden.

### Bezugszeichenliste:

- 100: Teilnehmer-Anschluss-Einheit (TAE)
- 110: Anschlussleiste
- 121, 122: Kontakte einer Anschlussbuchse der TAE
- 130: Diode
- 140: Widerstand
- 150: Anschlussbuchse
- 160: Auslesegerät
- 170: Datenspeicher
- 180: Gehäuse
- 200: Vermittlungsstelle
- 210: MSAN (Multi-Service Access Node)
- 220: DSLAM (Digital Subscriber Line Access Multiplexer)
- 230: BRAS (Broadband Remote Access Server)
- 250: Zweiadrige Teilnehmeranschlussleitung
- 300: Teilnehmerendgerät
- 400: Elektronische Schaltung
- 401, 402: Anschlüsse der elektronischen Schaltung
- 410: Integrierter Chip
- 420: Gleichrichter
- 425: Überspannungsableiter
- 431, 432: DIACs
- 440, 442: Anschlussleisten
- 444: Anschlussbuchse
- 451, 452: Transistoren
- 461, 462: Induktivitäten
- 470: Zenerdiode
- 471, 475: Diode
- 480: Kondensator
- 491 - 497: Widerstände
- 500: Datenfolge
- 510: Synchronisationssignal
- 520: Identifikationsinformation
- 530: CRC
- 540: Synchronisationssignal
- 600: Passiver Prüfabschluss
- 601, 602: Verbindungspunkte

## Patentansprüche

1. Telekommunikations-Anschluss-Einheit (100) mit Anschlusskontakten (401, 402) zum Anschließen an eine Teilnehmeranschlussleitung (250) und wenigstens einer Anschlussbuchse (150, 444) zum Anschließen einer teilnehmerseitigen Kommunikationsvorrichtung (300), umfassend
- einen auslesbaren Datenspeicher (170) mit einer darin speicherbaren Identifikationsinformation, welche die Telekommunikations-Anschluss-Einheit (100) eindeutig identifiziert, wobei der Datenspeicher (170) mittels eines externen Gerätes (210, 160) über die Anschlusskontakte (401, 402) oder über die wenigstens eine Anschlussbuchse (150, 444) auslesbar ist,
- eine Steuereinheit (410), wobei der Datenspeicher mittels der Steuereinheit auslesbar ist, und wobei die Steuereinheit dazu ausgebildet ist, in Antwort auf ein Aktivierungssignal, welches die Steuereinheit von dem externen Gerät (210, 160) empfängt, eine in dem Datenspeicher gespeicherte Identifikationsinformation an das externe Gerät zu übermitteln, wobei als Aktivierungssignal von dem externen Gerät (210, 160) eine Spannung oberhalb eines vorgegebenen Schwellwertes an Anschlüsse der Telekommunikations-Anschluss-Einheit (100) angelegt wird.

2. Telekommunikations-Anschluss-Einheit nach Anspruch 1, wobei die Steuereinheit dazu ausgebildet ist, in Antwort auf das Aktivierungssignal automatisch die im Datenspeicher gespeicherte Identifikationsinformation mittels eines strommodulierten Signals (500) zu übermitteln.

3. Telekommunikations-Anschluss-Einheit nach einem der Ansprüche 1 oder 2, wobei die Steuereinheit als Mikrocontroller ausgebildet ist, wobei insbesondere der Mikrocontroller und der Datenspeicher in einem gemeinsamen integrierten Chip (410) angeordnet sind.

4. Telekommunikations-Anschluss-Einheit nach einem der Ansprüche 1 bis 3, umfassend eine elektronische Schaltung (400) mit zwei Anschlüssen (401, 402) zum Anschließen an die a- und b-Adern einer Teilnehmeranschlussleitung (250), wobei die elektronische Schaltung (400) dazu ausgebildet ist, die Steuereinheit (410) zu aktivieren, wenn an die Anschlüsse (401, 402) der elektronischen Schaltung (400) eine Spannung oberhalb eines vorgegebenen Schwellwertes, insbesondere oberhalb einer Spannung von 60 V, insbesondere oberhalb einer Spannung von 64 V, angelegt wird.

5. Telekommunikations-Anschluss-Einheit nach einem der vorstehenden Ansprüche, wobei die elektronische Schaltung (400) wenigstens einen ersten und einen zweiten Widerstand (492, 493) umfasst, wobei der erste Widerstand (492) derart angeordnet ist, dass durch diesen ein elektrischer Strom zwischen den Anschlüssen (401, 402) der elektronischen Schaltung (400) fließt, wenn an die Anschlüsse (401, 402) der elektronischen Schaltung (400) eine Spannung oberhalb eines vorgegebenen Schwellwertes angelegt wird, und wobei der zweite Widerstand (493), gesteuert durch die Steuereinheit (410), parallel zum ersten Widerstand (492) schaltbar ist, um die Stromstärke des zwischen den Anschlüssen (401, 402) der elektronischen Schaltung (400) fließenden Stroms zu variieren.

6. Telekommunikations-Anschluss-Einheit nach einem der vorstehenden Ansprüche, wobei die elektronische Schaltung (400) einen Gleichrichter (420) und/oder eine zwischen die a- und b-Adern der Teilnehmeranschlussleitung geschaltete Induktivität (461, 462) umfasst.

7. Telekommunikations-Anschluss-Einheit nach einem der vorstehenden Ansprüche, wobei die Telekommunikations-Anschluss-Einheit (100) einen Netzabschluss bildet und einen passiven Prüfabschluss (600) umfasst.

8. Telekommunikations-Anschluss-Einheit nach einem der vorstehenden Ansprüche, wobei die Telekommunikations-Anschluss-Einheit (100) einen Überspannungsableiter (425) umfasst.

9. Auslesegerät (210, 160) zum Auslesen eines Datenspeichers (170) einer Telekommunikations-Anschluss-Einheit (100) gemäß einem der Ansprüche 1 bis 8, verbindbar über eine Teilnehmeranschlussleitung mit den Anschlusskontakten (401, 402) der Telekommunikations-Anschluss-Einheit (100) oder verbindbar mit der wenigstens einen Anschlussbuchse (150, 444) der Telekommunikations-Anschluss-Einheit (100), dazu ausgebildet,
- eine in der Telekommunikations-Anschluss-Einheit (100) angeordnete Steuereinheit (410) durch Übertragen eines Aktivierungssignals zu der Steuereinheit (410) zu aktivieren, wobei das Auslesegerät dazu ausgebildet ist, als Aktivierungssignal eine Spannung oberhalb eines vorgegebenen Schwellwertes an Anschlüsse der Telekommunikations-Anschluss-Einheit (100) anzulegen,
- ein in Antwort auf das Aktivierungssignal durch die Steuereinheit der Telekommunikations-Anschluss-Einheit (100) automatisch übermitteltes Signal, welches von der Steuereinheit in Abhängigkeit der in dem Datenspeicher gespeicherten Identifikationsinformation erzeugt wurde, zu empfangen und aus dem empfangenen Signal die Identifikationsinformation zu ermitteln.

10. Auslesegerät nach Anspruch 9, wobei das Auslesegerät ein über die Teilnehmeranschlussleitung (250) mit der Telekommunikations-Anschluss-Einheit (100) verbindbares entferntes Gerät ist, insbesondere ein vermittlungsseitig angeordneter MSAN (210) oder DSLAM (220).

11. Auslesegerät nach Anspruch 9, wobei das Auslesegerät ein lokal mit der Telekommunikations-Anschluss-Einheit (100), insbesondere mit der wenigstens einen Anschlussbuchse (150, 444) der Telekommunikations-Anschluss-Einheit (100), verbindbares Gerät (160) ist.

12. Auslesegerät nach einem der Ansprüche 9 bis 11, dazu ausgebildet, an eine in der Telekommunikations-Anschluss-Einheit (100) integrierte elektronische Schaltung (400) eine Spannung oberhalb eines vorgegebenen Schwellwertes, insbesondere oberhalb einer Spannung von 60 V, insbesondere oberhalb einer Spannung von 64 V, anzulegen.

13. Auslesegerät nach einem der Ansprüche 9 bis 12, dazu ausgebildet, von der Telekommunikations-Anschluss-Einheit (100) ein strommoduliertes Signal (500) zu empfangen und aus diesem eine Identifikationsinformation (520) zu ermitteln.

14. Verfahren zur Identifikation einer Telekommunikations-Anschluss-Einheit (100), umfassend die Schritte:
a) Bereitstellen einer Telekommunikations-Anschluss-Einheit (100) gemäß einem der Ansprüche 1 bis 8,
b) Speichern einer eindeutigen Identifikationsinformation in dem Datenspeicher (170) der Telekommunikations-Anschluss-Einheit (100), welche die Telekommunikations-Anschluss-Einheit (100) eindeutig identifiziert,
c) Installieren der Telekommunikations-Anschluss-Einheit (100) an einem Teilnehmeranschluss,
d) Aktivieren einer in der Telekommunikations-Anschluss-Einheit (100) angeordneten Steuereinheit (410) durch Übertragen eines Aktivierungssignals zu der Steuereinheit (410) von einem mit den Anschlusskontakten (401, 402) oder der wenigstens einen Anschlussbuchse (150, 444) der Telekommunikations-Anschluss-Einheit (100) verbundenen Auslesegerät (210, 160) gemäß einem der Ansprüche 9 bis 13, wobei als Aktivierungssignal von dem verbundenen Auslesegerät eine Spannung oberhalb eines vorgegebenen Schwellwertes an Anschlüsse der Telekommunikations-Anschluss-Einheit (100) angelegt wird,
e) in Antwort auf die Aktivierung, automatisches Übermitteln durch die Steuereinheit (410) eines in Abhängigkeit der in dem Datenspeicher gespeicherten Identifikationsinformation erzeugten Signals (500) von der Telekommunikations-Anschluss-Einheit (100) zu dem verbundenen Auslesegerät (210, 160), und
f) Empfangen des Signals (500) und Ermitteln der Identifikationsinformation (520) aus dem empfangenen Signal durch das verbundene Auslesegerät (210, 160).

## Claims

1. A telecommunication connection unit (100) with connection contacts (401, 402) for connection to a subscriber line (250) and at least one connection socket (150, 444) for connection of a subscriber-side communication device (300), comprising
- a readable data memory (170) with identification information which can be stored therein and which uniquely identifies the telecommunication connection unit (100), the data memory (170) being readable by means of an external device (210, 160) via the connection contacts (401, 402) or via the at least one connection socket (150, 444),
- a control unit (410), wherein the data memory can be read out by means of the control unit, and wherein the control unit is designed to transmit identification information stored in the data memory to the external device in response to an activation signal which the control unit receives from the external device (210, 160), wherein a voltage above a predetermined threshold value is applied to terminals of the telecommunication connection unit (100) as an activation signal from the external device (210, 160).

2. The telecommunication connection unit according to claim 1, wherein the control unit is designed to automatically transmit the identification information stored in the data memory by means of a current-modulated signal (500) in response to the activation signal.

3. The telecommunication connection unit according to any one of claims 1 or 2, wherein the control unit is designed as a microcontroller, wherein in particular the microcontroller and the data memory are arranged in a common integrated chip (410).

4. The telecommunication connection unit according to any one of claims 1 to 3, comprising an electronic circuit (400) with two terminals (401, 402) for connection to the a and b wires of a subscriber line (250), wherein the electronic circuit (400) is designed to activate the control unit (410) when a voltage above a predetermined threshold value, in particular above a voltage of 60 V, in particular above a voltage of 64 V, is applied to the terminals (401, 402) of the electronic circuit (400).

5. The telecommunication connection unit according to any one of the preceding claims, wherein the electronic circuit (400) comprises at least a first and a second resistor (492, 493), wherein the first resistor (492) is arranged such that an electric current flows through it between the terminals (401, 402) of the electronic circuit (400) when a voltage above a predetermined threshold is applied to the terminals (401, 402) of the electronic circuit (400), and wherein the second resistor (493), controlled by the control unit (410), can be switched in parallel with the first resistor (492) in order to vary the current intensity of the current flowing between the terminals (401, 402) of the electronic circuit (400).

6. The telecommunication connection unit according to any one of the preceding claims, wherein the electronic circuit (400) comprises a rectifier (420) and/or an inductance (461, 462) connected between the a and b wires of the subscriber line.

7. The telecommunication connection unit according to any one of the preceding claims, wherein the telecommunication connection unit (100) forms a network termination and comprises a passive test termination (600).

8. The telecommunication connection unit according to any one of the preceding claims, wherein the telecommunication connection unit (100) comprises an overvoltage arrester (425).

9. A reading device (210, 160) for reading out a data memory (170) of a telecommunication connection unit (100) according to any one of claims 1 to 8, connectable via a subscriber line to the connection contacts (401, 402) of the telecommunication connection unit (100) or connectable to the at least one connection socket (150, 444) of the telecommunication connection unit (100), designed
- to activate a control unit (410) arranged in the telecommunication connection unit (100) by transmitting an activation signal to the control unit (410), wherein the reading device is designed to apply a voltage above a predetermined threshold value to terminals of the telecommunication connection unit (100) as an activation signal,
- to receive a signal which is automatically transmitted by the control unit of the telecommunication connection unit (100) in response to the activation signal and which was generated by the control unit as a function of the identification information stored in the data memory, and to determine the identification information from the received signal.

10. The reading device according to claim 9, wherein the reading device is a remote device which can be connected to the telecommunication connection unit (100) via the subscriber line (250), in particular an MSAN (210) or DSLAM (220) arranged on the exchange side.

11. The reading device according to claim 9, wherein the reading device is a device (160) which can be connected locally to the telecommunication connection unit (100), in particular to the at least one connection socket (150, 444) of the telecommunication connection unit (100).

12. The reading device according to any one of claims 9 to 11, designed to apply a voltage above a predetermined threshold value, in particular above a voltage of 60 V, in particular above a voltage of 64 V, to an electronic circuit (400) integrated in the telecommunication connection unit (100).

13. The reading device according to any one of claims 9 to 12, designed to receive a current-modulated signal (500) from the telecommunication connection unit (100) and to determine identification information (520) from this signal.

14. A method for identifying a telecommunication connection unit (100), comprising the steps of
a) providing a telecommunication connection unit (100) according to any one of claims 1 to 8,
b) storing a unique identification information in the data memory (170) of the telecommunication connection unit (100), which uniquely identifies the telecommunication connection unit (100),
c) installing the telecommunication connection unit (100) on a subscriber connection
d) activating a control unit (410) arranged in the telecommunication connection unit (100) by transmitting an activation signal to the control unit (410) from a reading device (210, 160) according to any one of claims 9 to 13, which is connected to the connection contacts (401, 402) or the at least one connection socket (150, 444) of the telecommunication connection unit (100), wherein a voltage above a predetermined threshold value is applied by the connected reading device to connections of the telecommunication connection unit (100) as an activation signal,
e) in response to the activation, automatically transmitting by the control unit (410) a signal (500) generated in dependence on the identification information stored in the data memory from the telecommunication connection unit (100) to the connected reading device (210, 160), and
f) receiving the signal (500) and determining the identification information (520) from the received signal by the connected reading device (210, 160).

## Revendications

1. Unité de connexion des télécommunications (100) comportant des contacts de connexion (401, 402) destinés à la connexion à une ligne d'abonné (250) et au moins une prise de connexion (150, 444) destiné à la connexion à un dispositif de communication (300) côté abonné, comprenant
- une mémoire de données (170) lisible comprenant des informations d'identification pouvant être mémorisées dans ladite mémoire, lesquelles identifient de manière unique l'unité de connexion des télécommunications (100), dans laquelle la mémoire de données (170) pouvant être lue au moyen d'un appareil (210, 160) externe par l'intermédiaire des contacts de connexion (401, 402) ou par l'intermédiaire de l'au moins une prise de connexion (150, 444),
- une unité de commande (410), dans laquelle la mémoire de données peut être lue au moyen de l'unité de commande, et dans laquelle l'unité de commande est conçue, en réponse à un signal d'activation, que l'unité de commande reçoit en provenance de l'appareil (210, 160) externe, pour transmettre les informations d'identification, mémorisées dans la mémoire de données, à l'appareil externe, dans laquelle une tension supérieure à une valeur seuil prédéterminée est appliquée, en tant que signal d'activation de l'appareil (210, 160) externe, aux connexions de l'unité de connexion des télécommunications (100).

2. Unité de connexion des télécommunications selon la revendication 1, dans laquelle l'unité de commande est conçue pour transmettre automatiquement, en réponse au signal d'activation, les informations d'identification mémorisées dans la mémoire de données au moyen d'un signal (500) modulé en courant.

3. Unité de connexion des télécommunications selon l'une des revendications 1 ou 2, dans laquelle l'unité de commande est conçue sous la forme d'un microprocesseur de commande, dans laquelle, en particulier le microprocesseur de commande et la mémoire de données sont disposés dans une puce (410) intégrée commune.

4. Unité de connexion des télécommunications selon l'une quelconque des revendications 1 à 3, comprenant un circuit (400) électronique comportant deux connexions (401, 402) destinées à la connexion aux fils a et b d'une ligne d'abonné (250), dans laquelle le circuit (400) électronique est conçu pour activer l'unité de commande (410) lorsqu'une tension supérieure à la valeur seuil prédéterminée, en particulier supérieure à une tension de 60 V, en particulier supérieure à une tension de 64 V, est appliquée aux connexions (401, 402) du circuit (400) électronique.

5. Unité de connexion des télécommunications selon l'une quelconque des revendications précédentes, dans laquelle le circuit (400) électronique comprend au moins une première et une seconde résistance (492, 493), la première résistance (492) étant conçue de telle sorte que, à travers la première résistance, un courant électrique circule entre les connexions (401, 402) du circuit (400) électronique lorsqu'une tension supérieure à une valeur prédéterminée est appliquée aux connexions (401, 402) du circuit (400) électronique, et la seconde résistance (493), commandée à l'aide de l'unité de commande (410), pouvant être connectée en parallèle à la première résistance (492) pour modifier l'intensité du courant circulant entre les connexions (401, 402) du circuit (400) électronique.

6. Unité de connexion des télécommunications selon l'une quelconque des revendications précédentes, dans laquelle le circuit (400) électronique comprend un redresseur (420) et/ou une inductance (461, 462) connecté entre les fils a et b de la ligne d'abonné.

7. Unité de connexion des télécommunications selon l'une quelconque des revendications précédentes, dans laquelle l'unité de connexion des télécommunications (100) forme une terminaison réseau et comprend une terminaison d'essai (600) passive.

8. Unité de connexion des télécommunications selon l'une quelconque des revendications précédentes, dans laquelle l'unité de connexion des télécommunications (100) comprend un protecteur de surtension (425).

9. Appareil de lecture (210, 160) destiné à la lecture d'une mémoire de données (170) d'une unité de connexion des télécommunications (100) selon l'une quelconque des revendications 1 à 8, pouvant être connecté par l'intermédiaire d'une ligne d'abonné aux contacts de connexion (401, 402) de l'unité de connexion des télécommunications (100) ou pouvant être connecté à au moins une prise de connexion (150, 444) de l'unité de connexion des télécommunications (100), conçu
- pour activer une unité de commande (410) disposée dans l'unité de connexion des télécommunications (100) par transmission d'un signal d'activation à l'unité de commande (410), l'appareil de lecture étant conçu pour appliquer, en tant que signal d'activation, une tension supérieure à une valeur seuil prédéterminée aux connexions de l'unité de connexion des télécommunications (100),
- pour recevoir, en réponse au signal d'activation, un signal automatiquement transmis à l'aide de l'unité de commande de l'unité de connexion des télécommunications (100), lequel a été généré à l'aide de l'unité de commande en fonction des informations d'identification mémorisées dans la mémoire de données, et pour déterminer des informations d'identification à partir du signal reçu.

10. Appareil de lecture selon la revendication 9, l'appareil de lecture étant un appareil distant pouvant être connecté à l'unité de connexion des télécommunications (100) par l'intermédiaire de la ligne d'abonné (250), en particulier un MSAN (210) ou un DSLAM (220) disposé côté commutation.

11. Appareil de lecture selon la revendication 9, l'appareil de lecture étant un appareil (160) pouvant être connecté localement à l'unité de connexion des télécommunications (100), en particulier à l'au moins une prise de connexion (150, 444) de l'unité de connexion des télécommunications (100).

12. Appareil de lecture selon l'une quelconque des revendications 9 à 11, conçu pour appliquer, à un circuit (400) électronique intégré à l'unité de connexion des télécommunications (100), une tension supérieure à la valeur seuil prédéterminée, en particulier supérieure à une tension de 60 V, en particulier supérieure à une tension de 64 V.

13. Appareil de lecture selon l'une quelconque des revendications 9 à 12, conçu pour recevoir un signal (500) modulé en courant de l'unité de connexion des télécommunications (100) et pour déterminer à partir dudit signal les informations d'identification (520).

14. Procédé d'identification d'une unité de connexion des télécommunications (100), comprenant les étapes suivantes :
a) la fourniture d'une unité de connexion des télécommunications (100) selon l'une quelconque des revendications 1 à 8,
b) la mémorisation des informations d'identification uniques dans la mémoire de données (170) de l'unité de connexion des télécommunications (100), lesquelles identifient de manière unique l'unité de connexion des télécommunications (100),
c) l'installation de l'unité de connexion des télécommunications (100) sur une connexion d'abonné,
d) l'activation d'une unité de commande (410) disposée dans l'unité de connexion des télécommunications (100) par transmission d'un signal d'activation à l'unité de commande (410) à partir d'un appareil de lecture (210, 160), connecté aux contacts de connexion (401, 402) ou à l'au moins une prise de connexion (150, 444) de l'unité de connexion des télécommunications (100), selon l'une quelconque des revendications 9 à 13, dans lequel, en tant que signal d'activation de l'appareil de lecture connecté, une tension supérieure à une valeur seuil prédéterminée est appliquée aux connexions de l'unité de connexion des télécommunications (100),
e) la transmission automatique, en réponse à l'activation, à l'aide de l'unité de commande (410) d'un signal (500) généré en fonction des informations d'identification mémorisées dans la mémoire de données, de l'unité de connexion des télécommunications (100) à l'appareil de lecture (210, 160) connecté, et
f) la réception du signal (500) et la détermination des informations d'identification (520) à partir du signal reçu à l'aide de l'appareil de lecture (210, 160) connecté.
